# EUROPÄISCHE PATENTSCHRIFT

(11) **EP 3 527 078 B1**
(45) Veröffentlichungstag und Bekanntmachung des Hinweises auf die Patenterteilung: **07.04.2021**
(21) Anmeldenummer: 19158369.9
(22) Anmeldetag: 20.02.2019
(51) Int. Cl.: A01N 55/00, A01P 7/00

(54) **MITTEL ZUR BEHANDLUNG VON FLUGINSEKTEN, INSBESONDERE HONIGBIENEN, DIE VON MILBEN BEFALLEN SIND**
AGENT FOR TREATING FLYING INSECTS, IN PARTICULAR HONEY BEES, INFESTED BY MITES
MOYEN DE TRAITEMENT DES INSECTES VOLANTS, EN PARTICULIER DES MELLIFÈRES, AFFECTÉS PAR DES ACARIENS

(30) Priorität: 20.02.2018 DE 102018103768
(43) Veröffentlichungstag der Anmeldung: 21.08.2019
(73) Patentinhaber: Römer, Hermann C., 44869 Bochum (DE)
(72) Erfinder: Römer, Hermann C., 44869 Bochum (DE)
(74) Vertreter: Bendele, Tanja

(56) Entgegenhaltungen:
- WO-A1-2017/005827
- WO-A2-2012/069785
- DE-T2- 60 006 556
- US-A1- 2017 035 820

## Beschreibung

Gegenstand der Erfindung ist ein Stoff oder Stoffgemisch umfassend mindestens ein Siloxan oder ein Gemisch von Siloxanen zur Verwendung bei der Behandlung von Fluginsekten, insbesondere Bienen, bevorzugt Honigbienen, die von Spinnentieren, insbesondere Milben befallen sind sowie eine Formulierung enthaltend diese.

Die Varroamilbe (varroa destructor) ist ein eingewanderter Parasit. Die Milbe nutzt die Honigbiene als Wirt. Einerseits zur Ernährung andererseits zur Fortpflanzung. Die verdeckelte Brut der Biene dient der Varroamilbe dabei zur Vermehrung. Die Milbe zapft die wachsenden Bienenlarven der Brutzelle an und ernährt sich von ihrem Blut (Hämolymphe). Die europäischen Bienen haben keine natürlichen Strategien um die Milbe zu bekämpfen und gehen letztlich an ihr zu Grunde.

Heute ist die Varroamilbe in ihrer Stellung als Parasit von Apis mellifera (Europäische Honigbiene) von herausragender Bedeutung. Deshalb wird die Varroose, wie die Erkrankung verursacht durch Varroamilben genannt wird, von einigen Autoren auch als die schwerwiegendste Bedrohung für die weltweite Bienenwirtschaft erachtet. Kein anderes Pathogen hatte bisher vergleichbare Auswirkungen auf die Bienenhaltung. Der wirtschaftliche Schaden übersteigt bei Weitem den aller anderen Bienenkrankheiten zusammen.

Bei der Varroamilbe ist das Peritrema das Atemorgan. Es befindet sich auf der Seite des Bauches in Form einer länglichen Einsenkung. Vernetzt ist es mit den Stigmen des Tracheensystems auf dem die Wirkung der neuen Behandlungsmethode zielt.

Die momentan in Deutschland zugelassenen Mittel sind zur Behandlung der Bienen sind Perizin, Bayvarol, Apiguard, Thymovar, Api-Life VAR, Milchsäure 50%tig, Ameisensäure 60%tig, MAQS, Oxalsäurehydrat - Lösung und Oxuvar.

Diese Behandlungsmittel sind Säuen und dienen dazu die Varroamilbe zu vergiften/ zu verätzen. Hierbei besteht jedoch immer ein Risiko auch den Bienenstock unter massiven Stress und unter toxische Substanzen zu setzen, so dass auf der einen Seite das Bienenvolk bzw. die Bienen darunter leiden und ebenfalls absterben können. Des Weiteren besteht die Gefahr unter der Stressreaktion, dass die Königin vom eigenen Volk getötet wird.

DE 600 06 556 T2 offenbart ein Verfahren und eine Zusammensetzung zur Arthropodenbekämpfung beim Menschen. WO 2017/005827 A1 und WO 2012/069785 A2 offenbaren ein Verfahren und Zusammensetzungen zur Arthropodenbekämpfung zur Anwendung bei Geflügel.

Aufgabe der Erfindung war es daher ein Mittel zu finden, das vorzugsweise nicht giftig ist und/oder einen im Wesentlichen neutralen pH-Wert aufweist. Eine weitere Aufgabe der Erfindung bestand darin ein Mittel zu finden, dass vorzugsweise physikalisch auf die Parasiten einwirkt ohne die Bienen signifikant zu stressen.

Überraschend wurde gefunden, dass ein Mittel, welches üblicherweise bei der Behandlung von Kopfläusen am Menschen oder Läusen bei Säugetieren verwendet wird, auch zur Behandlung von Fluginsekten, insbesondere von Bienen, bevorzugt von verschiedenen Bienenarten, verwendet werden kann, um die Varroose zu behandeln. Gleichfalls Gegenstand der Erfindung ist ein Stoff oder Stoffgemisch umfassend mindestens ein Siloxan oder eine Mischung von Siloxanen zur Verwendung bei der Behandlung von Fluginsekten gegen einen Befall mit Kieferklauenträgern, insbesondere Spinnentieren. Spinnentiere umfassen Milben (Acari), besonders bevorzugt die Varoamilbe.

Erfindungsgemäß wird zur Behandlung der Varrose bei Bienen Dimeticon, internationaler Freiname (INN), ein Polydimethylsiloxan verwendet. Dimeticon ist eine handelsübliche Bezeichnung für ein ungiftiges Silikonöl. Es findet zudem Anwendung in technischen Bereichen als Brems- und Hydraulikflüssigkeit. Ebenso wird es in Haushaltsmitteln oder auch in pharmazeutischen Formulierungen zur Behandlung von Kopfläusen bei Menschen verwendet. Bei Varroex® (Dimeticon, Polydimethylsiloxan) handelt es ich um die Anwendung von Dimeticon gegen die Varroamilbe. Nach einer Pilotstudie zeigt sich, dass das Dimeticon, ähnlich wie bei der Kopflaus, die Stigmen und Tracheen (Atemöffnung der Laus und Milbe) durch die Kriecheigenschaften des Öls verstopfen und die Varroamilbe so erstickt und abstirbt.

Überraschend wurde festgestellt, dass das Dimeticon keinen toxischen Einfluss auf die Biene ausübt und daher eine sanftere Methode bietet gegen die Varroamilbe bei Bienen vorzugehen.

Das direkte Sprühverfahren auf die Bienen, wenn diese auf den Waben sitzen, ist am effektivsten. Des Weiteren besteht die Möglichkeit die Bienen durch andere Verfahren mit dem Dimeticon zu behandeln, so z.B. zu beträufeln bzw. Dimeticon so zu exponieren, dass ein regelmäßiger Kontakt stattfindet. Die Bienen können ebenso mit einem Schaum geringer Standfestigkeit behandelt werden. In anderen Alternativen kann vorgesehen werden die Bienen über mit mindestens einem Siloxan oder einer Mischung von Siloxanen benetztem Schwamm oder Bürste laufen zu lassen, um so die Bienen mit den Siloxanen in Kontakt treten zu lassen.

In einer Pilotstudie zeigt sich an zwei Bienenvölkern nach der Behandlung der Bienen mit dem Dimeticon eine massive Zunahme des Falls (Absterben) der Varroamilbe in den behandelnden Bienenvölkern. Dieses wurde durch das Zählen der toten und gefallenen Milben auf die Bodenplatte erfasst.

Die Völker sind über einen längeren Zeitraum regelmäßig mit NYDA® behandelt worden und der Fall der Varroamilbe wurde dokumentiert. Es zeigt sich immer eine Zunahme des Falls der Milbe nach Behandlung in einem Zeitraum von 1 bis 3 Tagen. Unter dem Begriff Bienen werden alle Bienenarten, von denen es über 20tausend gibt erfasst.

Das angegebene Dimeticon ist bereits als Läusemittel unter dem Namen NYDA® im Handel und wird sowohl bei Kindern als auch bei Erwachsenen gegen die Kopflaus angewendet.

Gegenstand der Erfindung ist ein Stoff oder Stoffgemisch umfassend mindestens ein Siloxan oder eine Mischung von Siloxanen umfassend mindestens ein Polydimethylsiloxan oder eine Mischung von Polydimethylsiloxanen, insbesondere ein Dimeticon oder eine Mischung von Dimeticonen optional mit cyclischen Polydimethylsiloxanen, zur Anwendung als veterinärmedizinisches Arzneimittel oder Medizinprodukt zur Anwendung bei der Behandlung von Fluginsekten und/oder deren Larven zum Abtöten von Spinnentieren oder deren Eiern, insbesondere zur Verwendung als Antiparasitikum zur Anwendung bei der Behandlung von Fluginsekten, insbesondere Bienen, und/oder deren Larven. Insbesondere ist der Stoff oder das Stoffgemisch geeignet zur Anwendung zum Abtöten von Spinnentieren bei Fluginsekten und/oder deren Larven, insbesondere zum Abtöten von Milben (Acari) und/oder deren Eiern bei Fluginsekten und/oder deren Larven, vorzugsweise bei Bienen, besonders bevorzugt bei Honigbienen und/oder Bienenlarven. Die Behandlung von Fluginsekten umfasst auch die Behandlung des Bienenstocks mit dem Stoff oder Stoffgemisch zum Abtöten der Spinnentiere, insbesondere der Milben.

Ebenso Gegenstand der Erfindung ist ein Stoff oder Stoffgemisch umfassend mindestens ein Siloxan oder eine Mischung von Siloxanen, insbesondere ein Dimeticon oder eine Mischung von Dimeticonen optional mit cyclischen Polydimethylsiloxanen, zur Anwendung in einem Verfahren zur Behandlung von Fluginsekten und/oder deren Larven, insbesondere zur Verwendung als Antiparasitikum zur Verwendung bei der Behandlung von Fluginsekten, insbesondere Bienen, und/oder deren Larven.

Gleichfalls Gegenstand der Erfindung ist ein Stoff oder Stoffgemisch umfassend mindestens ein Siloxan oder eine Mischung von Siloxanen, insbesondere ein Dimeticon oder eine Mischung von Dimeticonen optional mit cyclischen Polydimethylsiloxanen, zur Anwendung bei der Therapie im Veterinärbereich bei der Behandlung von Fluginsekten und/oder deren Larven, insbesondere zur Anwendung im Veterinärberiech als Antiparasitikum bei der Behandlung von Fluginsekten, insbesondere Bienen, und/oder deren Larven.

Gegenstand der Erfindung ist mindestens ein Siloxan oder eine Mischung von Siloxanen umfassend mindestens ein Polydimethylsiloxan oder eine Mischung von Polydimethylsiloxanen, insbesondere von linearen, cyclischen oder verzweigten Polydimethylsiloxanan. Bevorzugt ist mindestens ein lineares Polydimethylsiloxan oder eine Mischung von linearen Polydimethylsiloxanen und optional cyclischen Polydimethylsiloxanen. Dimeticon (CAS Nr. 900-65-9) α-Trimethylsilyl-ω-methyl-poly[oxy(dimethylsilandiyl)] (Ph. Eur. 8 Ausgabe, Grundwerk 2014)

Der Polymerisationsgrad des Polydimethylsilicons (H₃C)₃Si-[(H₃C)₂Si]ₙ-Si(CH₃)₃ ist zur pharmazeutischen und zu erfindungsgemäßen Anwendung mit n = 20 bis 400, insbesondere n = 20 bis 100, so gewählt, dass die kinematische Viskosität zwischen 1 bis 1300 mm²/s, insbesondere 20 bis 1000 mm²/s beträgt, bevorzugt von 10 bis 100 mm²/s, besonders bevorzugt von 10 bis 50 mm²/s. Das Polydimethylsilicon, d.h. Polydimethylsiloxan kann gleichfalls im Gemisch mit cyclischen und/oder verzweigten Polydimethylsiloxanen vorliegen.

Gegenstand der Erfindung ist auch ein Stoffgemisch umfassend von 10 bis 100 Gew.-% Siloxanen, wie Polydimethylsiloxane, bevorzugt ein Dimeticon oder eine Mischung von Dimeticonen optional mit cyclischen Polydimethylsiloxanen, in der Gesamtzusammensetzung des Stoffgemisches von 100 Gew.-% zur Verwendung bei der Behandlung von Fluginsekten. Bevorzugt sind 20 bis 90 Gew.-%, weiter bevorzugt sind 30 bis 50 Gew.-%, bezogen auf die Gesamtzusammensetzung des Stoffgemisches von 100 Gew.-%.

Gegenstand der Erfindung ist auch ein Stoffgemisch umfassend von 10 bis 100 Gew.-% Polydimethylsiloxane in der Gesamtzusammensetzung des Stoffgemisches von 100 Gew.-% zur Verwendung bei der Behandlung von Fluginsekten. Bevorzugt sind 30 bis 50 Gew.-% bezogen auf die Gesamtzusammensetzung des Stoffgemisches von 100 Gew.-% eines niedrigviskosen linearen Polysiloxans mit einer Viskosität kleiner 10 cSt und 35-65 Gew.-%, bezogen auf die Gesamtzusammensetzung eines höherviskosen linearen Polysiloxans mit einer Viskosität größer 90 cSt und kleiner 150 cSt. Optional kann ein Spreitmittel im Stoffgemisch vorliegen.

Gegenstand der Erfindung ist auch ein Stoffgemisch umfassend von 10 bis 100 Gew.-% Polydimethylsiloxane in der Gesamtzusammensetzung des Stoffgemisches von 100 Gew.-% zur Verwendung bei der Behandlung von Fluginsekten. Bevorzugt sind 30 bis 50 Gew.-% bezogen auf die Gesamtzusammensetzung des Stoffgemisches von 100 Gew.-%, eines niedrigviskosen linearen Polysiloxans mit einer Viskosität kleiner 10 cSt, 35-65 Gew.-%, bezogen auf die Zusammensetzung, eines höherviskosen linearen Polysiloxans mit einer Viskosität größer 90 cSt und kleiner 150 cSt sowie mindestens ein Spreitmittel.

Das niedrigviskose Polysiloxan Dimeticon weist vorzugsweise eine Viskosität von 1 cSt und das höherviskose Polysiloxan Dimeticon eine Viskosität von 100 cSt auf. Die kinematische Viskosität kann in cSt = Zentistokes beschrieben werden. (1 cST = 1 mm²/s). Die Viskosität kann mit einem Rotationsviskosimeter gemäß ISO 1652 (LV-Messkörper) und ISO 2555 (RV-Messkörper) bestimmt werden (bevorzugt wird die Viskosität bei Raumtemperatur 20 bis 23 °C bestimmt) .

Bevorzugt kann das Spreitmittel von 2 bis 10 Gew.-% mittelkettige Triglyceride und/oder von 1 bis 5 Gew.-% Jojobaöl, jeweils bezogen auf die Gesamtzusammensetzung des Stoffgemisches von 100 Gew.-% enthalten.

Geeignete Polydimethylsiloxane bzw. geeignetes Dimeticon ist u.a. in der DE600 06 556T2 oder DE10 2008 004 676A1 offenbart, auf die jeweils vollständig Bezug genommen wird. Gleichfalls offenbart die EP1993363 B1 geeignete Zusammensetzungen zur Abtötung von Ectoparasiten und/oder deren Eiern.

Das Spreitmittel kann ausgewählt sein aus mittelkettigen Triglyceriden, Kokosöl, Palmkernöl, Babassuöl, Triacetin, Jojobawachs, Cetearylisononanoat, Cetearyloctanoat, Isopropylmyristat, Isopropylpalmitat, Ethylhexylpalmitat und Cocoylcaprylocaprat.

Gleichfalls kann das Stoffgemisch von 10 bis 70 Gew.-% Triglyceride in der Gesamtzusammensetzung des Stoffgemisches von 100 Gew.-% umfassen.

Ferner ist Gegenstand der Erfindung ein Stoff oder Stoffgemisch umfassend mindestens ein Siloxan oder eine Mischung von Siloxanen zur Anwendung als veterinärmedizinisches Arzneimittel oder Medizinprodukt zum Abtöten von Spinnentieren bei Fluginsekten. Bevorzugt ist ein Stoff oder Stoffgemisch umfassend mindestens ein Siloxan oder eine Mischung von Siloxanen zur Anwendung als veterinärmedizinisches Arzneimittel zur Verwendung bei der Behandlung von Fluginsekten und/oder deren Larven, die von Milben (Acari) und/oder deren Eiern befallen sind. Besonders bevorzugt ist ein Stoff oder Stoffgemisch von mindestens einem Siloxan oder einer Mischung von Siloxanen welches verwendet wird zur Behandlung von Bienen und/oder deren Larven, insbesondere von Honigbienen, die von Milben (Acari), insbesondere der Varroamilbe, und/oder Eiern der Milben befallen sind. Ferner ist Gegenstand der Erfindung ein Stoff oder Stoffgemisch, das zur Behandlung der Varroose bei Honigbienen verwendet wird.

Gleichfalls Gegenstand der Erfindung ist eine Formulierung umfassend einen Stoff oder ein Stoffgemisch von mindestens einem Siloxan oder einer Mischung von Siloxanen, wie Polydimethylsiloxanen, bevorzugt von Dimeticon, als arzneilichen Wirkstoff oder therapeutisch wirksamen Wirkstoff zur Verwendung bei der Behandlung von Fluginsekten, wobei die Formulierung ein Pulver, Aerosol, Spray und/oder schäumbare Formulierung ist, wobei das Spray, das Aerosol oder die schäumbare Formulierung optional ein Treibmittel umfasst.

Besonders bevorzugt ist der Stoff oder das Stoffgemisch oder die Zusammensetzung ein Aerosol, Spray, Öl, Emulsion oder eine flüssige Formulierung. Besonders bevorzugt ist der Stoff, die Stoffmischung oder die Zusammensetzung eine Flüssigkeit umfassend Öl oder eine flüssige Formulierung umfassend Emulsion oder Öl, insbesondere jeweils unabhängig mit einer Viskosität von 0,1 bis 10⁵ cP (mPas, 20-23 °C), bevorzugt 1 bis 10² cP (mPas, 20-23 °C), Viskosimeter nach EN ISO 3219.

Ebenso wird die Verwendung einer mindestens ein Siloxan oder eine Mischung von Siloxanen enthaltenden Formulierung zur Behandlung von Fluginsekten und/oder deren Larven, vorzugsweise Bienen, besonders bevorzugt von Honigbienen, die von Milben und/oder deren Eiern befallen sind, beansprucht. Bevorzugt können die Milben, deren Eier von den Fluginsekten entfernt werden, indem diese abfallen.

Als Treibmittel, insbesondere Treibgas, in einer Formulierung können verwendet werden: gesättigte Kohlenwasserstoffe, wie Propan, Butan, Pentan, Luft, Stickstoff und/oder Inertgas.

Gegenstand der Erfindung ist ein Stoff oder Stoffgemisch umfassend mindestens ein Siloxan oder eine Mischung von Siloxanen umfassend ein Dimeticon oder eine Mischung von Dimeticonen optional mit cyclischen Polydimethylsiloxanen, zur Anwendung als veterinärmedizinisches Arzneimittel oder Medizinprodukt zur Anwendung bei der Behandlung von Fluginsekten und/oder deren Larven, insbesondere zur Verwendung als Antiparasitikum zur Anwendung bei der Behandlung von Fluginsekten, insbesondere Bienen, und/oder deren Larven.

Gegenstand der Erfindung ist ein Stoff oder Stoffgemisch umfassend mindestens ein Siloxan oder eine Mischung von Siloxanen, umfassend mindestens ein lineares Polydimethylsiloxan oder eine Mischung von linearen Polydimethylsiloxanen und optional cyclischen und/oder verzweigten Polydimethylsiloxanen umfassend Polydimethylsilicon der Struktur (H₃C)₃Si-[(H₃C)₂Si]ₙ-Si(CH₃)₃ mit n = 20 bis 400, gewählt, dass die kinematische Viskosität zwischen 1 bis 1300 mm²/s beträgt.

Gleichfalls Gegenstand der Erfindung ist die Verwendung von Siloxanen, wie Polydimethylsiloxanen, zur Behandlung von Honigbienen und/oder deren Larven, die von der Varroamilbe befallen sind oder zur Behandlung der Brut von Fluginsekten, insbesondere von Bienenstöcken, Bienenlarven oder Bienenwaben, die von Spinnentieren, insbesondere Milben befallen sind.

Ferner ist Gegenstand der Erfindung die Verwendung zur Behandlung eines Bienenstocks oder Teilen davon von Honigbienen, die von der Varroamilbe und/oder deren Eiern befallen sind mit mindestens einem Siloxan oder einem Stoffgemisch von Siloxanen.

Bevorzugt zu behandelnde Fluginsekten umfassen Bienen (Bienenarten), wie die Honigbiene, oder auch Hummeln oder Schmetterlinge.

Die Bienen können die folgenden Bienenarten umfassen: Insektengruppe *Apiformes* oder *Anthophila Bienarten, polylektische* Bienenarten, oligolektische Bienenarten und/oder *monolektie* Bienenarten. Besonders bevorzugt ist die westliche Honigbiene (Apis mellifera).

Nachfolgend wird die Erfindung anhand der Beispiele beschreiben ohne die Erfindung auf diese zu beschränken.

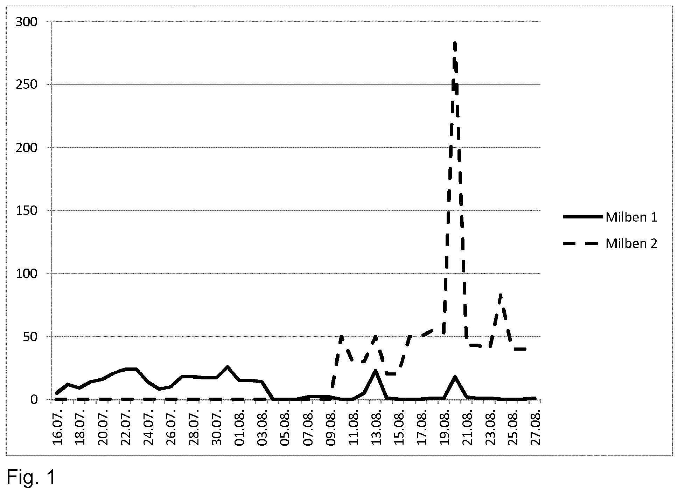

Es wurden Versuche an zwei Bienenvölkern vorgenommen, deren Ergebnisse in der Tabelle 1 und Figur 1 dargestellt sind. Die Art der Behandlung mit Dimeticon, wie nachfolgend dargestellt, variierte, um nach der ersten Behandlungserfolg auszuloten, welche Behandlungsmethode besonders gut gegen Milben wirksam ist.

Das Volk 1 (ca 20.000 Bienen) wurde im Zeitraum vom 23. - 25.07.18 mit einem getränkten Schwamm am Boden ausgestattet. Die Bienen konnten zum Verlassen des Bienenstocks über den Schwamm laufen. Die Tage vor dem 23.07.18 wurden die herabgefallenen Milben - ohne Behandlung mit Dimeticon - ausgezählt. Im Zeitraum vom 30.07. - 01.08.18 wurde das Volk 1 mit Dimeticon besprüht. Am 13.08.2018 und am 20.08.2018 wurden einzelne Waben (Volk 1) zusätzlich mit Dimeticon besprüht

Die Auswertung der Versuche belegt eindeutig die Wirksamkeit des Dimeticons zur Behandlung von Bienen und deren Larven gegenüber einem Milbenbefall.

Als die effektivste Methode hat sich das direkte Besprühung der Bienen auf den Waben erwiesen.

Als Ergebnis kann festgestellt werden, dass das Volk 1 nach dem 20.08.2018 kaum noch Milbenfall zeigt, obwohl es nach der letzten Behandlung am 20.082018 nicht weiter behandelt wurde.

Das Volk 2 (ca. 50.000 Bienen) zeigte einen massiven Milbenfall bei der Erstbehandlung am 10. August. Die Erstbehandlung führte zu einem sehr ausgeprägten Milbensterben an einem Tag mit weiterem Milbensterben an nachfolgenden Tagen. Zudem wurde beim Volk 2 direkt damit begonnen einzelne Waben zu besprühen (20.08.18).

Eine negative Auswirkung auf die Bienenvölker konnte nicht festgestellt werden. Diese Daten motivieren zu einer weiteren standardisierten Folgestudie an mehreren Völkern.

**Tabelle 1: Behandlung Volk 1 und Volk2 mit Dimeticon an den vorgenannten Tagen**

| | **Volk 1** | **Volk 2** |
|---|---|---|
| **Tag** | **Milben** | **Milben 2** |
| 16.07. | 5 | - |
| 17.07. | 12 | - |
| 18.07. | 9 | - |
| 19.07. | 14 | - |
| 20.07. | 16 | - |
| 21.07. | 21 | - |
| 22.07. | 24 | - |
| 23.07. | 24 | - |
| 24.07. | 14 | - |
| 25.07. | 8 | - |
| 26.07. | 10 | - |
| 27.07. | 18 | - |
| 28.07. | 18 | - |
| 29.07. | 17 | - |
| 30.07. | 17 | - |
| 31.07. | 26 | - |
| 01.08. | 15 | - |
| 02.08. | 15 | - |
| 03.08. | 14 | - |
| 04.08. | 0 | - |
| 05.08. | 0 | - |
| 06.08. | 0 | - |
| 07.08. | 2 | - |
| 08.08. | 2 | - |
| 09.08. | 2 | - |
| 10.08. | 0 | 50 |
| 11.08. | 0 | 30 |
| 12.08. | 5 | 30 |
| 13.08. | 23 | 50 |
| 14.08. | 1 | 20 |
| 15.08. | 0 | 20 |
| 16.08. | 0 | 50 |
| 17.08. | 0 | 50 |
| 18.08. | 1 | 55 |
| 19.08. | 1 | 53 |
| 20.08. | 18 | 283 |
| 21.08. | 2 | 43 |
| 22.08. | 1 | 43 |
| 23.08. | 1 | 40 |
| 24.08. | 0 | 83 |
| 25.08. | 0 | 40 |
| 26.08. | 0 | 40 |
| 27.08. | 1 | 40 |

## Patentansprüche

1. Stoff oder Stoffgemisch umfassend mindestens ein Siloxan oder eine Mischung von Siloxanen umfassend mindestens ein Polydimethylsiloxan oder eine Mischung von Polydimethylsiloxanen zur Anwendung als veterinärmedizinisches Arzneimittel oder Medizinprodukt zur Verwendung bei der Behandlung von Fluginsekten und/oder deren Larven zum Abtöten von Spinnentieren oder deren Eiern.

2. Stoff oder Stoffgemisch nach Anspruch 1, zur Anwendung als veterinärmedizinisches Arzneimittel oder Medizinprodukt zur Verwendung bei der Behandlung von Fluginsekten und/oder deren Larven, die von Milben (Acari) befallen sind.

3. Stoff oder Stoffgemisch nach Anspruch 1 oder 2, **dadurch gekennzeichnet, dass** es angewendet wird zur Behandlung von Bienen und/oder deren Larven, insbesondere Honigbienen, die von Milben (Acari) und/oder deren Eiern befallen sind.

4. Stoff oder Stoffgemisch nach einem der Ansprüche 1 bis 3, **dadurch gekennzeichnet, dass** es angewendet wird zur Behandlung von Bienen, die von Varroamilben und/oder deren Eiern befallen sind.

5. Stoff oder Stoffgemisch nach einem der Ansprüche 1 bis 4, **dadurch gekennzeichnet, dass** es angewendet wird zur Behandlung der Varroose bei Honigbienen und/oder deren Larven.

6. Stoff oder Stoffgemisch nach einem der Ansprüche 1 bis 5, **dadurch gekennzeichnet, dass** das Siloxan oder die Mischung von Siloxanen Dimeticon umfasst.

7. Stoff oder Stoffgemisch nach einem der Ansprüche 1 bis 6, **dadurch gekennzeichnet, dass** das Siloxan oder die Mischung von Siloxanen umfasst lineare, cyclische oder verzweigte Polydimethylsiloxane oder eine Mischung von linearen Polydimethylsiloxanen und optional cyclischen Polydimethylsiloxanen.

8. Stoff oder Stoffgemisch nach Anspruch 7, **dadurch gekennzeichnet, dass** das Siloxan oder die Mischung von Siloxanen ausgewählt ist aus linearen Polydimethylsiloxanen.

9. Stoff oder Stoffgemisch umfassend mindestens ein Siloxan oder eine Mischung von Siloxanen umfassend ein Dimeticon oder eine Mischung von Dimeticonen optional mit cyclischen Polydimethylsiloxanen, zur Anwendung als veterinärmedizinisches Arzneimittel oder Medizinprodukt zur Anwendung bei der Behandlung von Fluginsekten und/oder deren Larven, insbesondere zur Verwendung als Antiparasitikum zur Anwendung bei der Behandlung von Fluginsekten, insbesondere Bienen, und/oder deren Larven.

10. Stoff oder Stoffgemisch umfassend mindestens ein Siloxan oder eine Mischung von Siloxanen umfassend mindestens ein lineares Polydimethylsiloxan oder eine Mischung von linearen Polydimethylsiloxanen und optional cyclischen und/oder verzweigten Polydimethylsiloxanen umfassend Polydimethylsilicon der Struktur (H₃C)₃Si-[(H₃C)₂Si]ₙ-Si(CH₃)₃ mit n = 20 bis 400, wobei die kinematische Viskosität zwischen 1 bis 1300 mm²/s beträgt.

11. Formulierung umfassend einen Stoff oder ein Stoffgemisch nach einem der Ansprüche 1 bis 10 als arzneilichen Wirkstoff oder therapeutisch wirksamen Wirkstoff zur Verwendung bei der Behandlung von Fluginsekten, deren Brut und/oder deren Waben **dadurch gekennzeichnet, dass** die Formulierung ein Pulver, Aerosol, Spray und/oder schäumbare Formulierung ist, wobei das Spray, das Aerosol oder die schäumbare Formulierung optional ein Treibmittel umfasst.

## Claims

1. Substance or mixture of substances comprising at least one siloxane or a mixture of siloxanes comprising at least a polydimethyl siloxane or a mixture of polydimethyl siloxanes for use as a veterinary medicament or medical product for use in the treatment of flying insects and/or their larvae for killing arachnids or their eggs.

2. Substance or mixture of substances according to claim 1, for use as veterinary medicament or medical product for use in the treatment of flying insects and/or their larvae being infested by mites (Acari).

3. Substance or mixture of substances according to claim 1 or 2, **characterised in** being used in treatment of bees and/or their larvae, in particular honeybees, being infested by mites (Acari) and/or their eggs.

4. Substance or mixture of substances according to any one of the claims 1 to 3, **characterised in** being used in treatment of bees being infested by Varroa mites and/or their eggs.

5. Substance or mixture of substances according to any one of the claims 1 to 4, **characterised in** being used in treatment of varroosis in honeybees and/or their larvae.

6. Substance or mixture of substances according to any one of the claims 1 to 5, **characterised in that** the siloxane or the mixture of siloxanes comprises dimeticone.

7. Substance or mixture of substances according to any one of the claims 1 to 6, **characterised in that** the siloxane or the mixture of siloxanes comprises linear, cyclic or branched polydimethyl siloxanes or a mixture of linear polydimethyl siloxanes and optionally cyclic polydimethyl siloxanes.

8. Substance or mixture of substances according to claim 7, **characterised in that** the siloxane or the mixture of siloxanes is selected from linear polydimethyl siloxanes.

9. Substance or mixture of substances comprising at least one siloxane or a mixture of siloxanes comprising a dimeticone or a mixture of dimeticones optionally with cyclic polydimethyl siloxanes, for use as veterinary medicament or medical product for use in the treatment of flying insects and/or their larvae, in particular for use as antiparasitic for use in the treatment of flying insects, in particular bees, and/or their larvae.

10. Substance or mixture of substances comprising at least one siloxane or a mixture of siloxanes comprising at least one linear polydimethyl siloxane or a mixture of linear polydimethyl siloxanes and optionally cyclic and/or branched polydimethyl siloxanes comprising polydimethyl silicone of the structure (H₃C)₃Si-[(H₃C)₂Si]ₙ-Si(CH₃)₃ with n = 20 to 400, the kinematic viscosity amounting to between 1 to 1300 mm²/s.

11. Formulation comprising a substance or a mixture of substances according to any one of the claims 1 to 10 as medicinal agent or therapeutically effective agent for use in the treatment of flying insects, their brood and/or their combs, **characterised in that** the formulation is a powder, aerosol, spray and/or foamable formulation, the spray, the aerosol or the foamable formulation optionally comprising a blowing agent.

## Revendications

1. Substance ou mélange de substances comprenant au moins un siloxane ou un mélange des siloxanes comprenant au moins un polydiméthyle siloxane ou un mélange des polydiméthyle siloxanes pour utilisation en tant que médicament vétérinaire ou produit médical pour utilisation dans le traitement des insectes volants et/ou leurs larves pour tuer les arachnides ou leurs œufs.

2. Substance ou mélange de substances selon la revendication 1, pour utilisation en tant que médicament ou produit médical pour utilisation dans le traitement des insectes volants and/or leurs larves étant infestés par des acariens (Acari).

3. Substance ou mélange de substances selon la revendication 1 ou 2, **caractérisée** en étant usée dans le traitement des abeilles et/ou leurs larves, en particulier des abeilles mellifères, étant infestées par des acariens (Acari) et/ou leurs œufs.

4. Substance ou mélange de substances selon l'une des revendications 1 à 3, **caractérisée** en étant usée dans le traitement des abeilles étant infestées par des acariens Varroa et/ou leurs œufs.

5. Substance ou mélange de substances selon l'une des revendications 1 à 4, **caractérisée** en étant usée dans le traitement de la varroose chez les abeilles mellifères et/ou leurs larves.

6. Substance ou mélange de substances selon l'une des revendications 1 à 5, **caractérisée en ce que** le siloxane ou le mélange des siloxanes comprend le diméticone.

7. Substance ou mélange de substances selon l'une des revendications 1 à 6, **caractérisée en ce que** le siloxane ou le mélange des siloxanes comprend des polydiméthyle siloxanes linéaires, cycliques ou ramifiés ou un mélange des polydiméthyle siloxanes linéaires et facultativement des polydiméthyle siloxanes cycliques.

8. Substance ou mélange de substances selon la revendication 7, **caractérisée en ce que** le siloxane ou le mélange des siloxanes est sélectionné parmi des polydiméthyle siloxanes linéaires.

9. Substance ou mélange de substances comprenant au moins un siloxane ou un mélange des siloxanes comprenant un diméticone ou un mélange des diméticones facultativement avec des polydiméthyle siloxanes, pour utilisation en tant que médicament vétérinaire ou produit médical pour utilisation dans le traitement des insectes volants et/ou leurs larves, en particulier pour utilisation en tant que parasiticide pour utilisation dans le traitement des insectes volants, en particulier des abeilles, et/ou leurs larves.

10. Substance ou mélange de substances comprenant au moins un siloxane ou un mélange des siloxanes comprenant au moins un polydiméthyle siloxane linéaire ou un mélange des polydiméthyle siloxanes linéaires et facultativement des polydiméthyle siloxanes cycliques et/ou ramifiés comprenant du polydiméthyle silicone de la structure
(H₃C)₃Si-[(H₃C)₂Si]ₙ-Si(CH₃)₃ avec n = 20 à 400, la viscosité cinématique montant à entre 1 à 1300 mm²/s.

11. Formulation comprenant une substance ou un mélange de substances selon l'une des revendiation1 à 10 en tant qu'agent médicinal ou agent efficace thérapeutiquement pour utilisation dans le traitement des insectes volants, leur couvain et/ou leurs rayons, **caractérisée en ce que** la formulation est une poudre, un aérosol, un spray et/ou une formulation moussable, le spray, l'aérosol ou la formulation moussable comprenant facultativement un agent gonflant.
